# EUROPÄISCHE PATENTANMELDUNG

(11) **EP 0 922 425 A1**
(43) Veröffentlichungstag der Anmeldung: **16.06.1999**
(21) Anmeldenummer: 97121912.6
(22) Anmeldetag: 12.12.1997
(51) Int. Cl.: A47J 31/44

(54) **Brühgetränkezubereitungsmaschine**

(71) Anmelder: Braun Aktiengesellschaft, Frankfurt am Main (DE)
(72) Erfinder: Schamberg, Stefan, 61250 Usingen (DE); Schober, Uwe, 65817 Eppstein (DE); Kelterborn, Heinz, 61184 Karben 3 (DE); Trebitz, Bernd, Dr., 35510 Butzbach (DE)

(57) **Zusammenfassung**

Die Erfindung besteht aus einer Brühgetränkezubereitungsmaschine mit einem mit Wasser (23) befüllbaren Wassertank (1) und einer mit einer Zutat (9), beispielsweise Kaffeemehl oder Teeblätter, befüllbaren Brüheinheit (6). Das Wasser (23) wird erhitzt und der Brüheinheit (6) zum Zwecke der Extraktion zugeführt. Nach dem Extraktionsvorgang fließt das Brühgetränk (24) in einen Auffangbehälter (8). Die Brühgetränkezubereitungsmaschine weist eine Einrichtung (10, 11) zur Erfassung der Wasser- und Zutatmenge auf. Die Einrichtung (10, 11) führt entsprechende elektrische Signale einer Auswerteelektronik (14) zu. Die Auswerteelektronik (14) zeigt auf einer Anzeigeeinrichtung (17) den gefundenen Stärkegrad des Brühgetränks an. Durch diese Anordnung kann der Stärkegrad je nach dem Geschmack einer Bedienungsperson beliebig verändert werden. Auch wird dabei nur soviel Zutatmenge benötigt, wie für den gewünschten Stärkegrad gerade nur erforderlich ist.

## Beschreibung

Die Erfindung betrifft eine elektrisch betriebene Brühgetränkezubereitungsmaschine mit einem mit Wasser befüllbaren Wassertank und einer mit einer Zutat, beispielsweise Kaffeemehl oder Teeblätter, dosierbaren Brüheinheit, wobei das Wasser in einem elektrischen Wassererhitzer erhitzt, der Brüheinheit zum Zwecke der Extraktion zugeführt wird und als Extraktionsgetränk in einen Auffangbehälter fließt.

Es ist bereits bekannt, bei einer als Kaffeemaschine betriebenen elektrischen Brühgetränkezubereitungsmaschine in den Filterträger einen Papierfilter einzusetzen, der dann mit einer Zutat, vorzugsweise Kaffee, befüllt wird. Um einer Bedienungsperson anzuzeigen, welche Zutatmenge sie in Abhängigkeit der Tassenzahl benötigt, sind am Inneren des Papierfilters Markierungen in Form von Strichen oder Kreisen angebracht. Wählt also eine Bedienungsperson beispielsweise fünf Tassen Wasser, so füllt sie den Wassertank mit der entsprechenden Wassermenge. Anschließend füllt sie den Papierfilter mit der Zutatmenge soweit auf, bis die fünfte Markierung von der Zutat verdeckt bzw. mit ihr gerade bündig wird.

Derartige am Papierfilter angebrachte Markierungen dienen einer Bedienungsperson als Dosierhilfe, sie sind aber relativ ungenau, insbesondere deshalb, weil die Papierfilter sich in der Regel V-förmig nach unten verjüngen und oft so stark zerknittert sind, daß ihre Behältervolumen verhältnismäßig ungenau sind. Auch die Tatsache, daß die eingegebene Kaffeemenge erst so lange in der Brüheinheit gerüttelt werden muß, bis sie im wesentlichen horizontal zu den Markierungen verläuft, ist aufwendig und schwierig handhabbar. Wird der Rüttelvorgang nicht vorgenommen, so kann eine genaue Dosierung gar nicht vorgenommen werden.

Weiterhin ist es bekannt, bei einer Brühgetränkezubereitungsmaschine an der Außenwand des Wassertanks nebeneinander zwei Skalen anzubringen, von denen die eine Skala die Wassermenge in Form der Anzahl der Tassen und die zweite Skala die Kaffeemehlmenge unter Angabe der Anzahl der benötigten Löffel angibt. Bei einer in den Tank eingegebenen Wassermenge zeigt demnach die Skala den Wasserstand für die gewünschte Tassenzahl und gleichzeitig die danebenliegende Kaffeemehlmengenskala die für diese Wassermenge benötigte Kaffeemehllöffelzahl an. Durch eine derartige Dosierhilfe können allerdings nur Durchschnittswerte erreicht werden, durch die ein für eine Bedienungsperson individuell gewünschter Stärkegrad nicht genau festgelegt werden kann.

Trotz dieser vereinfachten Dosierungshilfe muß der Benutzer zunächst einmal bei einer gewünschten Brühmenge die hierzu richtige Anzahl der Meßlöffel ablesen, diese dann bei Eingabe von Kaffeemehl zählen und dabei darauf achten, daß die Meßlöffel immer etwa gleich gefüllt sind, um zu einem Brühgetränk gleichen Geschmacks zu gelangen. Dieser Ablauf ist verhältnismäßig aufwendig und erfordert von einer Bedienungsperson erhöhte Aufmerksamkeit.

Aufgabe der Erfindung ist es daher, eine Brühgetränkezubereitungsmaschine zu schaffen, bei der die Zutat- und Wasserdosierung für einen Benutzer einfacher ausgestaltet ist und durch die - unabhängig von der Tassenzahl - stets ein mit gleicher Qualität reproduzierbarer Kaffee erzeugt werden kann, bei dem immer wieder das richtige Verhältnis von Zutat- und Wassermenge in Abhängigkeit des gewünschten Stärkegrades stimmt. Dabei soll die Brühgetränkezubereitungsmaschine möglichst preiswert und besonders sparsam im Verbrauch der benötigten Zutatmenge sein.

Diese Aufgabe wird erfindungsgemäß durch die kennzeichnenden Merkmale der Patentansprüche 1 bis 3 gelöst.

Durch die elektronische Erfassung der im Wassertank befindlichen Wassermenge und der in der Brüheinheit eingegebenen Zutatmenge gemäß den Merkmalen des Patentanspruchs 1 können diese Signale einer Auswerteelektronik zugeführt werden, über die dann eine Anzeigeeinrichtung, beispielsweise ein Display, Leuchtdioden verschiedener Farben oder auch ein Sprachspeicher aktiviert werden, über die der Stärkegrad ausgegeben wird. Dabei kann selbstverständlich auch die Wasser- und Zutatmenge angezeigt werden. Durch die erste Erfindung ist es also möglich, einen genau definierten Stärkegrad in Abhängigkeit der Tassenzahl und der Zutatmenge zu bestimmen. Ist der Stärkegrad zu hoch, wird Zutatmenge aus der Brüheinheit weggenommen, ist er zu gering, wird Zutatmenge hinzugefügt. Und dies so lange, bis der gewünschte Stärkegrad an der Anzeigeeinrichtung mit dem Ist-Stärkegrad übereinstimmt. Bei der ersten Erfindung wird demnach nur soviel Zutatmenge verbraucht wie sie für den gewünschten Stärkegrad und die Tassenzahl nötig ist. Die Dosierung des Brühgetränks wird also erstmals nicht mehr dem Verbraucher sondern einer Auswerteelektronik überlassen, durch die eine genaue Dosierung des Stärkegrades in Abhängigkeit der Wassermenge zur Zutatmenge erfolgt. Die erste Erfindung ist bei allen Brühgetränkezubereitungsmaschine anwendbar, insbesondere bei Kaffeemaschinen für den häuslichen Bedarf, die den größten Anteil des Brühgetränkemarktes darstellen. Es ist aber auch denkbar, die erste Erfindung bei Teemaschinen einzusetzen, hierbei muß lediglich die zur Erfassung der Teeblättermenge benötigte Sensoreinrichtung verhältnismäßig empfindlich sein, da das Gewicht bzw. das Volumen von Teeblättern wesentlich geringer ist als dies bei Kaffeemehl der Fall ist. Sie ist aber auch bei anderen Brühvorgängen, wie dem Aufbereiten einer Boullion, eines Kakaos etc., einsetzbar. Dabei muß dann lediglich eine weitere und andere Auswerteeinrichtung in der Elektronik eingebaut sein.

Da sich Wasser leichter von Hand dosieren läßt als Kaffeemehl, wäre die erste Erfindung auch als Halbautomat in einer Brühgetränkezubereitungsmaschine einsetzbar, bei dem die Kaffeemehlmenge elektronisch gewogen und die Wassermenge über eine Betätigungseinrichtung elektronisch eingegeben werden. Diese Signale werden dann in einer Auswerteelektronik mit dort festgelegten Werten verglichen. Der so ermittelte Stärkegrad wird an der Anzeigeeinrichtung ausgegeben.

In einer zweiten Erfindung wird nunmehr in einer Meßeinrichtung die Wassermenge ermittelt und der Stärkegrad über eine elektrische Betätigungseinrichtung eingegeben, wobei deren elektrische Signale einer Auswerteelektronik zugeführt, dort elektronisch verarbeitet werden und schließlich nur noch auf einer Anzeigeeinrichtung die berechnete Zutatmenge angezeigt wird. Dabei kann selbstverständlich auch die Wassermenge und der Stärkegrad angezeigt werden. Die erforderliche Zutatmenge braucht nur noch von einer Bedienungsperson in die Brüheinheit eingefüllt zu werden. Auch dies ist für den Verbraucher eine äußerst hilfreiche Lösung, denn von vielen Kaffeetrinkern wird gewünscht, daß der Stärkegrad des Brühgetränks unabhängig von der Tassenzahl stets konstant bleibt. Die Auswerteelektronik kann so ausgestaltet sein, daß ein Signal an der Anzeigeeinrichtung erst dann angezeigt wird, wenn die eingegebene Kaffeemehlmenge in Abhängigkeit der Tassenzahl zu dem gewünschten Stärkegrad des Brühgetränks führt. Auch die zweite Erfindung kann bei allen Brühgetränkezubereitungsmaschinen, insbesondere auch bei einer Teemaschine, eingesetzt werden.

Die dritte Erfindung wird dann von einer Bedienungsperson gewählt, wenn sie nur eine bestimmte Zutatmenge zur Verfügung hat und sie aber dennoch einen bestimmten Stärkegrad wünscht. Bei dieser Erfindung wird dann nur soviel Wasser als Zugabe angezeigt, wie es in Abhängigkeit der vorhandenen Zutatmenge für den gewünschten Stärkegrad erforderlich ist. Diese Variante wählt man dann, wenn nicht unbedingt eine genau vorgegebene Tassenzahl gewünscht wird oder die Kaffeemehlmenge begrenzt ist. Diese Lösung könnte auch als Halbautomat in einer Brühgetränkezubereitungsmaschine verwendet werden, wenn die Kaffeemehlmenge elektronisch mittels einer Wägeeinrichtung erfaßt wird, der Stärkegrad per Hand eingegeben wurde und die von der Auswerteelektronik ermittelte Wassermenge ebenfalls von Hand eingegeben wird. Allerdings sollte man hier einen Meßbecher oder eine Meßskala am Wassertank für die Wasserdosiermenge verwenden, der auf das System abgestimmt ist. Auch hier können selbstverständlich auch die Zutatmenge und der Stärkegrad angezeigt werden.

Alle drei Erfindungen können in einer Brühgetränkezubereitungsmaschine realisiert sein, so daß jeweils zwei Parameter von der Meßeinrichtung erfaßt werden, während der dritte Parameter von der Auswerteelektronik ermittelt und anschließend auf der Anzeigeeinrichtung angezeigt wird. Die Anzeigeeinrichtung zeigt dabei den aufgrund der engegebenen Werte ermitteltten Istwert an. Die Anzeigeeinrichtung kann aber auch so anzeigen, daß sie immer den fehlenden Betrag angibt, der bis zum gewünschten Sollpunkt noch nötig ist.

Gemäß den Merkmalen des Patentanspruchs 4 ist in der Brühgetränkezubereitungsmaschine eine Betätigungseinrichtung, beispielsweise ein oder mehrere Schalter, vorhanden, in die die Wassermenge anhand der Anzahl der Tassen eingegeben wird. Dies kann beispielsweise über eine Taste durch mehrmaliges Betätigen entsprechend der Anzahl der Tassen oder durch die Wahl einer von mehreren Tasten erfolgen, die jeweils einer bestimmten Tassenzahl zugeodnet ist. Bei letzterer Lösung müßten dann bei 12 Tassen 12 Betätigungstasten vorhanden sein. Man könnte aber auch die Tastenzahl auf 2 reduzieren, wenn beispielsweise für fünf Tassen ein Schalter und für eine Tasse noch ein weiterer Schalter vorhanden wäre.

Gemäß den Merkmalen des Patentanspruchs 5 wird zur Ermittlung der Wassermenge eine Wägeeinrichtung benutzt, die beispielsweise mit einer Federwaage, mit einem durch Druck beaufschlagten Quarz, mit einem Dehnmeßstreifen oder mit weiteren, das Gewicht ermittelnden Einrichtungen versehen ist. Derartige Wägeeinrichtungen sind verhältnismäßig preiswert, wobei die beiden letztgenannten gleich ein elektrisches Signal erzeugen, während die federbelastete Wägeeinrichtung noch mit einer elektrischen Übersetzung, wie beispielsweise einen variablen Widerstand, versehen sein muß, um ein notwendiges elektrisches Signal der Auswerteelektronik zuzusenden. Entsprechend den Merkmalen des Patentanspruchs 6 ist auch zur Ermittlung der Wassermenge eine Volumenmeßstation denkbar, wobei diese das Wasservolumen über eine elektrische Füllstandsmeßeinrichtung ermittelt, die so geeicht ist, daß aufgrund eines konstanten Flächenquerschnitts bei verschiedenen Höhen sich verschiedene Wassermengen ergeben. Die Wassersmenge kann aber auch mit Hilfe einer elektrisch betriebenen Durchflußmeßeinrichtung ermittelt werden, bei der beispielsweise das ein Rohr durchströmende Wasser ein Rad antreibt, das wiederum über eine elektrische Meßstation ein Signal entsprechend der gemessenen Umdrehungen an die Auswerteelektronik abgibt (Anspruch 7). Es ist aber auch möglich, die Tassenzahlmessung durch eine Pumpe zu steuern, deren Betriebszeit eine bestimmte Wassermenge zugeordnet werden kann, wenn die Drehzahl der Pumpe und die dabei erzeugte Fördermenge pro Zeiteinheit konstant sind (Anspruch 8).

Die Erfassung der Zutatmenge kann gemäß den Merkmalen des Patentanspruchs 9 durch eine zweite Wägestation erfolgen, wobei prinzipiell gleich aufgebaute Wägestationen sowohl für die Erfassung der Zutatmenge wie für die Erfassung der Wassermenge genommen werden können. Allerdings kann die Meßgenauigkeit und der Meßbereich der Wägeeinrichtung für die Zutatmenge anders gewählt sein als bei der Wägeeinrichtung für das Wasser, da das Gewicht der Zutatmenge erheblich leichter ist als Wasser.

Gemäß den Merkmalen des Patentanspruchs 10 kann die Meßeinrichtung auch durch die Förderleistung einer Fördereinrichtung, beispielsweise einer Förderschnecke, gebildet sein. Auch hier wird vorausgesetzt, daß die Förderleistung pro Zeiteinheit stets konstant ist.

Nach den Merkmalen des Patentanspruchs 11 kann auch solch eine Volumenmeßstation gewählt werden, bei der die Oberfläche der Zutatmenge mittels Licht- oder Infrarotstrahlen oder ähnlicher Abtasteinrichtungen abgetastet wird. Je nach Füllgrad ändert sich die Höhe des Füllstandes und somit auch die Zeit, die ein Lichtstrahl braucht, um von einer Lichtquelle auf die Oberfläche der Zutat aufzutreffen, dort reflektiert und von einem Empfänger empfangen zu werden.

Durch die kennzeichnenden Merkmale des Patentanspruchs 13 wird eine besonders einfache Erfassungseinrichtung mit nur einem einzigen Sensor erreicht. Dabei muß allerdings entweder die ganze Brühgetränkezubereitungsmaschine oder der Wassertank inklusive der Brüheinheit gewogen werden. Dabei sollte die Elektronik so ausgerichtet sein, daß sie, gleichgültig ob zuerst Wasser oder Kaffeemehl eingefüllt wird, erkennt, welche Substanz zuerst eingegeben wurde. Dies kann beispielsweise durch den unterschiedlichen Anstieg pro Zeiteinheit des Gewichtes von Kaffeemehl zu Wasser herausgefunden werden, wenn die Substanzen eingefüllt werden. Es kann aber auch durch die Wägeeinrichtung und die Auswerteelektronik dadurch herausgefunden werden, daß das Gewicht von nur einer Tasse Wasser (ca. 135 g) immer größer ist als das Gewicht des Kaffeemehls bei 12 Tassen, das etwa 80 g beträgt. 12 Tassen sind nämlich bei im Haushalt benutzten Brühgetränkezubereitungsmaschinen die höchste Tassenzahl, die man mit diesem Gerät brühen kann. Die Unterscheidung der Substanzen kann aber auch dadurch erfolgen, daß das Gerät angibt, welche Substanz zuerst eingefüllt werden soll. Wird dann allerdings die falsche Substanz eingefüllt, so würde dies zu Fehlmessungen führen, wenn keine Fehlersucheinrichtung installiert ist.

Entsprechend den Merkmalen des Patentanspruchs 14 ist es möglich, den für eine Bedienungsperson bevorzugten Stärkegrad über eine Eingabe einzugeben, diese dann in der Auswerteelektronik zu speichern, um dann in Abhängigkeit unterschiedlicher Tassenzahlen jeweils auf die benötigte Kaffeemehlmenge hochzurechnen, so daß immer der gleiche Stärkegrad ausgegeben wird. Das Niveau des Stärkegrades kann aber auch über die Auswerteelektronik justiert und so eingestellt werden, daß eine Bedienungsperson den Stärkegrad "schwach" absenken oder anheben kann. Diese Absenkung gilt dann allerdings auch für den Kaffee "mittel" und "stark". Eine Bedienungsperson, die also den "mittleren" Kaffee gerne etwas "stärker" trinkt, kann ihn durch diese elektrische Niveauregelung etwas anheben.

Durch die Merkmale des Patentanspruchs 15 ist die Auswerteelektronik so ausgelegt, daß sie mindestens drei Stärkegrade kennt und diese durch eine Betätigungseinrichtung in Form einer oder mehrerer Betätigungsknöpfen gewählt werden können. Bei einem einzigen Betätigungsknopf muß also bei der Auswahl des Stärkegrades 3 dieser Knopf dreimal gedrückt werden. Bei drei Knöpfen braucht nur der für den Stärkegrad 3 zuständige Betätigungsknopf gedrückt werden. Es ist aber auch denkbar, jeden beliebigen Stärkegrad zwischen 1 und 3 elektronisch in Zehntelschritten zu speichern und die Dosierung der Kaffee- und Wassermenge entsprechend anzugeben und zu kontrollieren.

Nach den Merkmalen des Patentanspruchs 16 sind die erfaßten Werte in der in den Patentansprüchen 1 bis 3 zusammengestellten Kombinationen in je einer Wertetabelle im Mikroprozessor abgelegt. Diese Wertetabelle wird dann vom Mikroprozessor entsprechend der Eingabe abgefragt und dadurch der gesuchte Wert ermittelt.

Durch die Merkmale des Patentanspruchs 17 kann einer Bedienungsperson der jeweilige Ist-Zustand oder der Soll-Zustand des Stärkegrades bzw. der Zutatmenge oder der Wassermenge angezeigt werden. Die Angabe kann dabei in Prozent, in Gewicht oder in einer Verhältniszahl erfolgen, wobei auch ein Herunterwiegen bis zum gewünschten Punkt möglich ist.

Eine einfache Anzeigeeinrichtung kann durch eine oder mehrere Leuchten hergestellt werden (Anspruch 18), wobei bei drei Leuchten beispielsweise die mittlere Leuchte den optimalen Wert und die links davon befindlichen Leuchte einen zu geringen und die darüberliegende Leuchte einen zu hohen Wert anzeigt. Die Anzeigeeinrichtung kann aber auch durch Leuchten verschiedener Farben hergestellt werden, wobei beispielsweise bei der Angabe des Stärkegrades die grüne Leuchte den optimalen Wert, die gelbe einen zu niedrigen und die rote einen zu hohen Wert anzeigt. Es ist aber auch denkbar, diese Anzeigeeinrichtung akustisch über Tonsignale oder über Sprache auszugeben.

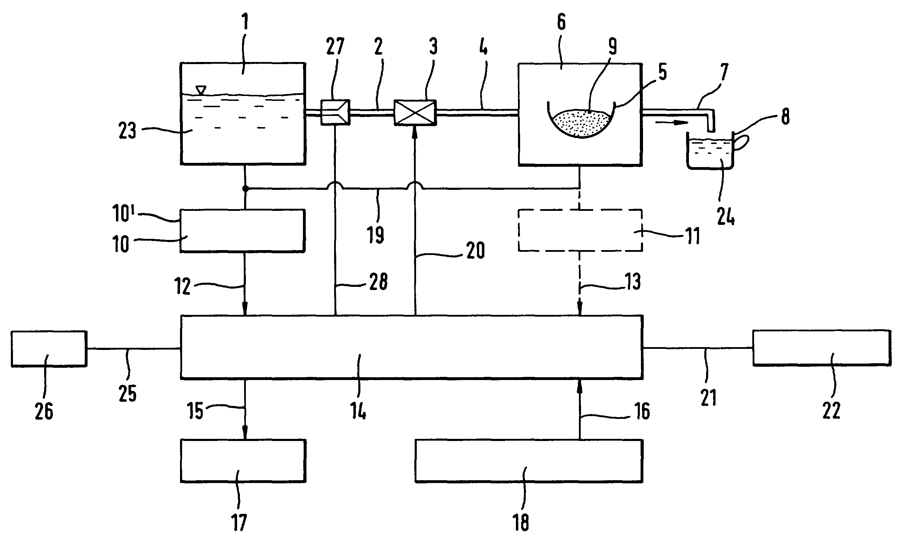

Ein Ausführungsbeispiel der Erfindung ist in der einzigen Zeichnung dargestellt und wird im folgenden näher erläutert:

Die einzige Figur zeigt eine schematische Darstellung eines Blockschaltbildes, in der nur die für die Erfindung wesentlichen Teile dargestellt sind. Die Positionsnummer 1 zeigt einen Wassertank, dessen Wasser 23 über einen als Pumpe und gleichzeitig als elektrischer Wassererhitzer 27 dienenden Durchlauferhitzer beheizbar ist, die über eine Steuerleitung 28 mit einer Auswerteelektronik 14 verbunden ist. Vom Wassertank 1 verläuft eine Leitung 2 zu einer Durchflußsteuereinrichtung 3, die wiederum über eine Leitung 4 mit einem Filter 5 einer Brüheinheit 6 verbunden ist. Die Brüheinheit 6 ist Bestandteil einer Brühgetränkezubereitungsmaschine, die zwar in der Zeichnung nicht dargestellt ist, in der aber das in der einzigen Figur dargestellte Blockschaltbild in Hardwareform integriert ist.

Die Brüheinheit 6 weist einen Auslaß 7 auf, über den das fertige Brühgetränk in ein darunter abgestelltes Gefäß 8 abfließen kann. Sowohl die Flüssigkeit 23 im Wassertank 1 wie die im Filter 5 einzugebende Zutatmenge 9 sind über je eine Sensoreinheit 10, 11 derart verbunden, daß aufgrund der sowohl im Wassertank 1 wie im Filter 5 eingegebenen Mengen von den Sensoreinheiten 10 bzw. 11 ermittelt werden können. Von den Sensoreinheiten 10, 11 abgehende, elektrische Leitungen 12, 13 sind mit einer Auswerteelektronik 14 verbunden, die wiederum über elektrische Leitungen 15, 16 mit einem Display 17 oder sonst einer Anzeigeeinrichtung und mit einer elektrisch betätigbaren Tassenvorwahleinrichtung 18 verbunden sind. Während die von der Auswerteelektronik 14, die vorzugsweise von einem Mikroprozessor gebildet wird, abgehende Leitung 15 das Display 17 mit entsprechenden Signalen versorgt, bringt die Leitung 16 eine Impuls zur Auswerteelektronik 14, um ihr die gewünschte Tassenzahl anzugeben.

Die Sensoreinheit 11 und die Leitung 13 sind gestrichelt dargestellt, da sie, wenn die Sensoreinheit 10' sowohl die Meßdaten des Wassertanks 1 wie der Brüheinheit 6 ermittelt, entfallen kann. Zu diesem Zweck dient dann die Verbindungsleitung 19. Des weiteren ist die Auswerteelektronik 14 über eine Leitung 20 mit der Durchflußsteuerung 3 verbunden. Das Display 17 kann eine LCD-Anzeige, Leuchtdioden oder sonst eine Anzeige sein, die den Stärkegrad des Brühgetränks angibt. Die Tassenvorwahlbetätigungseinrichtung 18 kann aus einzelnen, nicht dargestellten Schaltern für je eine Tasse oder aus einem einzigen Schalter bestehen, der dann mit der Auswerteelektronik 14 derart verbunden ist, daß diese die hintereinander angegebenen Schaltsignale pro Tasse ermittelt und speichert.

Die Auswertelektronik 14 ist über eine weitere Leitung 21 mit einer elektrischen Betätigungseinrichtung 22 verbunden, über die auch die gewünschte Tassenzahl, die Zutatmenge und der Stärkegrad von Hand eingegeben werden kann. Des weiteren ist die Auswerteelektronik 14 über eine elektrische Leitung 25 mit einem elektrischen Zeitglied 26 verbunden, über das die Uhrzeit sowie die Ein- und Ausschaltzeit der Brühgetränkezubereitungsmaschine gesteuert werden kann.

Die Wirkungsweise der erfindungsgemäßen Brühgetränkezubereitungsmaschine ist folgende:

Gemäß der ersten Erfindung wird zunächst Wasser in den Tank 1 eingegeben. Die Sensoreinheit 10 ermittelt die Wassermenge und gibt sie an die Auswerteelektronik 14 weiter. Nun wird in den Filter 5 Kaffeemehl 9 bzw. Teeblätter eingegeben und die Sensoreinheit 11 mißt diese Menge und gibt sie ebenfalls an die Auswertelektronik 14. Bei Verwendung nur einer einzigen Sensoreinheit 10 wird zunächst das Wasser gemessen, der Inhalt der Auswerteelektronik zugeführt, dann wird anschließend die Zutatmenge 9 gemessen und ebenfalls der Auswertelektronik zugeführt. Dabei sollte die Auswerteelektronik 14 so ausgeführt sein, daß sie den Gewichtszuwachs, der bei Wasser erheblich größer ist als bei der Zutat, erkennt und daher registriert, welches Medium als erstes befüllt wurde. Wird nur eine einzige Sensoreinheit 10 gewählt, so ist es sinnvoll, die ganze Kaffeemaschine zu wiegen, um den Gewichtszuwachs angeben zu können.

Nachdem nun die Auswerteelektronik 14 die Meßwerte für Kaffee bzw. Tee und Wasser erhalten hat, wird über die Leitung 15 das Display 17 mit elektrischen Impulsen gespeist, die wahlweise die Wassermenge, die Kaffeemenge und/oder die Abweichung von der idealen Kaffeemenge zur Wasseremenge bzw. umgekehrt oder den Stärkegrad je nach Wunsch der Bedienungsperson anzeigen kann. Das Niveau des Stärkegrades kann auch individuell vom Benutzer durch eine Einstelleinrichtung (nicht dargestellt) in der Auswerteelektronik 14 kalibriert, d.h. abgesenkt oder angehoben werden. Bei letzterer Ausführung hat der Benutzer die Möglichkeit, Kaffee oder Wasser nachzudosieren, bis der gewünschte Stärkegrad erreicht ist.

Wenn nur eine Teilmenge des im Wassertank 1 eingefüllten Wasservolumens gebrüht werden soll, so kann dies erfindungsgemaß durch eine manuell betätigbare elektrische Tassenvorwahleinrichtung erfolgen. Hierbei wird die Anzahl der Tassen über eine Eingabevorrichtung eingegeben, die ihrerseits die elektrischen Impulse über die Leitung 16 der Auswerteelektronik zuführt. Die Auswerteelektronik 14 kontrolliert dann über die Leitung 20 die Durchflußsteuereinheit 3, so daß sie zu jeder Zeit weiß, wieviel Wasser aus dem Wassertank 1 zu dem Filter 5 geflossen ist. Die elektronische Steuerung muß allerdings bei jedem neuen Brühvorgang auf Null zurückgestellt werden. Die Durchflußsteuereinrichtung 3 kann vorteilhafterweise durch ein zeitgesteuertes Magnetventil, durch die Steuerung einer Pumpe 27 selbst, insbesondere dann wenn diese ein unter Förderung von Dampfblasen arbeitender Durchflußerhitzer 27 ist, der in den meisten heutzutage erhältlichenKaffeemaschinen eingesetzt wird, oder durch andere Durchflußmeßeinrichtungen realisiert werden.

Die Auswerteelektronik 14 kann auch über eine weitere Leitung 21 mit einer elektrischen Betätigungseinrichtung 22 verbunden sein, die durch ihre Betätigung den gewünschten Stärkegrad des Brühgetränks der Auswerteelektronik 14 zuführt und am Display 17 anzeigt. Die Betätigungseinrichtung 22 kann ebenfalls wieder aus einem einzigen oder mehreren Betätigungsknöpfen mit dahinter befindlichen Schaltern bestehen, über die der Stärkegrad in die Auswerteleketronik 14 eingegeben wird. Wird also der Stärkegrad über die Betätigungseinrichtung 22 und die Tassenvorwahl über die Tassenvorwahlbetätigungseinrichtung 18 der Auswerteelektronik zugeführt, so kann dann am Display 17 die erforderliche Zutatmenge in Gramm oder Volumen oder Meßlöffelzahl angezeigt werden. Bei der Verwendung von Leuchten genügt es, wenn über jeweils eine Leuchte "zu wenig", "richtige" oder "zuviel" Zutatmenge angezeigt wird. Zur besseren Unterscheidung können die Leuchten unterschiedlich gefärbt sein, beispielsweise rot, gelb und grün. Eine Bedienungsperson füllt also nur noch in den Filter 5 eine Zutat 9 ein und nach Auswertung wird dann am Display angezeigt, ob die Zutatmenge für die gewählte Tassenzahl und den Stärkegrad richtig, zuwenig oder zuviel ist.

Nach Einschaltung der Brühgetränkezubereitungsmaschine, was ebenfalls von dem Mikroprozessor automatisch nach richtiger Eingabe von Wasser, Stärkegrad und Kaffeemehl gesteuert werden kann, wird die Wassermenge erhitzt und fließt in den Filter 5 ein. Dabei wird die Menge des Wassers von der Durchflußmeßeinrichtung 3 kontrolliert und das Gerät abgeschaltet, sobald diese durchgeflossene Wassermenge der Tassenvorwahlmenge entspricht. Auch hier stellt die Brühgetränkezubereitungsmaschine ein für den Benutzer optimal erwünschtes Brühgetränk her.

Eine weitere Erfindung besteht darin, in den Filter 5 eine gewisse Zutatmenge 9 einzufüllen. Diese wird über die Sensoreinrichtung 11 der Auswerteelektronik 14 zugeführt. Nun betätigt man die Tassenvorwahl entsprechend der gewünschten Tassen bzw. man gibt eine gewünschte Wassermenge in den Wassertank, deren Menge dann von der Sensoreinrichtung 10 gemessen und der Auswerteelektronik 14 zugeführt wird. Diese berechnet bzw. ermittelt nun mit Hilfe einer Wertetabelle, ob der zu brühende Kaffee bei der angegebenen Tassenzahl schwach, mittel oder stark ist. Ist der Kaffee zu schwach, so bleibt dem Benutzer die Möglichkeit, die Tassenzahl durch Betätigung der Tassenvorwahl 18 so lange zu reduzieren, bis im Display 17 der gewünschte Stärkegrad erscheint. Ist der Stärkegrad zu stark, so kann Wasser bis zum gewünschten Stärkegrad nachgefüllt werden. Anschließend kann das Gerät für den Brühvorgang eingeschaltet werden.

Selbstverständlich weist die Auswerteelektronik eine Wertetabelle auf, die die eingegebenen Daten mit festgelegten Daten vergleicht und sobald die sich überschneidenden Daten gefunden sind, ist der gesuchte Wert gefunden, der entsprechend am Display 17 angezeigt wird. Ob ein Kaffee stark, mittel oder schwach ist, muß zuvor in mit Bedienungspersonen durchgeführten Geschmacksversuchen ermittelt und in eine Wertetabelle eingetragen werden.

Bei allen drei Erfindungen kann die Auswerteelektronik auch so ausgestaltet sein, daß nach jedem Zu- oder Abwiegen die Anzeigeeinrichtung den erreichten Wert anzeigt. Dies läßt eine genauere Dosierung zu.

Eine mit der Erfindung ausgestattete Brühgetränkezubereitungsmaschine kann vollautomatisch arbeiten, d.h., nach Einschalten des Gerätes mißt dieses die aufzubrühende Wassermenge und die Zutatmenge und gibt den Stärkegrad des Brühgetränks in einer Anzeigeeinrichtung an. Ist der ideale Wert erreicht, wird das Gerät eingeschaltet, wenn nicht eine Verzögerung der Einschaltung ausdrücklich gewünscht wird. Gleiches gilt für das Brühende.

## Patentansprüche

1. Brühgetränkezubereitungsmaschine mit einem mit Wasser (23) befüllbaren Wassertank (1) und einer mit einer Zutat (9), beispielsweise Kaffeemehl oder Teeblätter befüllbaren Brüheinheit (6), wobei das Wasser (23) erhitzt und der Brüheinheit (6) zum Zwecke der Extraktion zugeführt wird und welches nach dem Extraktionsvorgang als Brühgetränk (24) in einen Auffangbehälter (8) fließt,
**dadurch gekennzeichnet**,
daß die Brühgetränkezubereitungsmaschine eine Einrichtung (10,11) zur Erfassung der Wasser- und Zutatmenge aufweist, daß die Einrichtung (10, 11) entsprechende elektrische Signale einer Auswerteelektronik (14) zuführt und daß die Auswerteelektronik (14) auf einer Anzeigeeinrichtung (17) den sich ergebenden Stärkegrad des Brühgetränks (24) anzeigt.

2. Brühgetränkezubereitungsmaschine nach dem Oberbegriff des Anspruch 1,
**dadurch gekennzeichnet**,
daß die Brühgetränkezubereitungsmaschine eine Einrichtung (10, 11) zur Erfassung der Wassermenge und des Stärkegrades des gewünschten Brühgetränks (24) aufweist, daß die Einrichtung (10, 11) entsprechende elektrische Signale einer Auswerteelektronik (14) zuführt und daß die Auswerteelektronik (14) auf einer Anzeigeeinrichtung (17) die erforderliche Zutatmenge (9) anzeigt.

3. Brühgetränkezubereitungsmaschine nach dem Oberbegriff des Anspruch 1,
**dadurch gekennzeichnet**,
daß die Brühgetränkezubereitungsmaschine eine Einrichtung (11, 22) zur Erfassung der Zutatmenge und des Stärkegrades aufweist, daß die Einrichtung (11, 22) entsprechende elektrische Signale einer Auswerteelektronik (14) zuführt und daß die Auswerteelektronik (14) auf einer Anzeigeeinrichtung (17) die Wassermenge für das Brühgetränk (24) anzeigt.

4. Brühgetränkezubereitungsmaschine nach Anspruch 1 oder 2,
**dadurch gekennzeichnet**,
daß die Einrichtung zur Erfassung der Wassermenge eine von einer Person bedienbare Betätigungseinrichtung (22) ist, in die die Wassermenge entsprechend einer gewünschten Tassenzahl eingegeben wird.

5. Brühgetränkezubereitungsmaschine nach Anspruch 1 oder 2,
**dadurch gekennzeichnet**,
daß die Einrichtung (10) zur Erfassung der Wassermenge von einer ersten Wägeeinrichtung gebildet wird.

6. Brühgetränkezubereitungsmaschine nach Anspruch 1 oder 2,
**dadurch gekennzeichnet**,
daß die Einrichtung (10) zur Erfassung der Wassermenge von einer Volumenmeßstation gebildet wird.

7. Brühgetränkezubereitungsmaschine nach Anspruch 1 oder 2,
**dadurch gekennzeichnet**,
daß die entsprechend einer gewünschten Tassenzahl erforderliche Wassermenge durch eine in der Brühgetränkezubereitungsmaschine ausgebildete Durchflußmeßeinrichtung (3) gesteuert wird.

8. Brühgetränkezubereitungsmaschine nach Anspruch 1 oder 2,
**dadurch gekennzeichnet**,
daß die gewünschte Tassenzahl durch die Dauer der Inbetriebnahme einer das Wasser (23) der Brüheinheit (6) zuführenden Pumpe (27) gebildet wird.

9. Brühgetränkezubereitungsmaschine nach Anspruch 1 oder 3,
**dadurch gekennzeichnet**,
daß die Einrichtung (11) zur Erfassung der Zutatmenge von einer zweiten Wägestation gebildet wird.

10. Brühgetränkezubereitungsmaschine nach Anspruch 1 oder 3,
**dadurch gekennzeichnet**,
daß die Einrichtung (11) zur Erfassung der Zutatmenge von der Einschaltdauer einer eine bestimmte Zutatmenge pro Zeiteinheit abgebenden Fördereinrichtung (27) gebildet wird.

11. Brühgetränkezubereitungsmaschine nach Anspruch 1 oder 3,
**dadurch gekennzeichnet**,
daß die Einrichtung (11) zur Erfassung der Zutatmenge duch eine Volumenmeßstation gebildet wird.

12. Brühgetränkezubereitungsmaschine nach Anspruch 1 oder 3,
**dadurch gekennzeichnet**,
daß die Einrichtung (11) zur Erfassung der Zutatmenge eine von einer Person bedienbare Betätigungseinrichtung (22) ist, in die die Zutatmenge entsprechend einer gewünschten Meßlöffelzahl eingegeben wird.

13. Brühgetränkezubereitungsmaschine nach Anspruch 1,
**dadurch gekennzeichnet**,
daß die Einrichtung (10, 11) zur Erfassung der Wasser- und Zutatmenge durch eine einzige Sensoreinrichtung (10') gebildet wird, die jeweils das Gewicht der Brühgetränkezubereitungsmaschine nach den einzelnen Befüllungsvorgängen ermittelt.

14. Brühgetränkezubereitungsmaschine nach Anspruch 2 oder 3,
**dadurch gekennzeichnet**,
daß der für eine Bedienungsperson ideale Stärkegrad eines Brühgetränks (24) der Auswerteelektronik (14) zugeführt werden kann und daß hierdurch das Verhältnis von Wassermenge zu Zutatmenge kalibriert und in der Auswerteelektronik (14) gespeichert wird.

15. Brühgetränkezubereitungsmaschine nach Anspruch 2 oder 3,
**dadurch gekennzeichnet**,
daß der Stärkegrad in verschiedenen Stufen, mindestens aber drei Stufen unterteilt ist, daß die Einrichtung zur Erfassung des Stärkegrades eine von einer Person bedienbare Betätigungseinrichtung (22) ist, in die der Stärkegrad eingegeben wird.

16. Brühgetränkezubereitungsmaschine nach Anspruch 1, 2 oder 3,
**dadurch gekennzeichnet**,
daß die Auswerteelektronik (14) in an sich bekannter Weise aus einem Mikroprozessor besteht, der die jeweils zwei erfaßten Werte mit den in einer Wertetabelle abgelegten Werten vergleicht und den dritten gesuchten Wert ermittelt bzw. errechnet, der dann der Anzeigeeinrichtung zur Anzeige zugeführt wird.

17. Brühgetränkezubereitungsmaschine nach Anspruch 1, 2 oder 3,
**dadurch gekennzeichnet**,
daß die Anzeigeeinrichtung (17) aus einem Display besteht.

18. Brühgetränkezubereitungsmaschine nach Anspruch 1, 2 oder 3,
**dadurch gekennzeichnet**,
daß die Anzeigeeinrichtung (17) aus einzelnen Leuchten besteht. 19. Brühgetränkezubereitungsmaschine nach Anspruch 18,
**dadurch gekennzeichnet**,
daß die Leuchten verschiedene Farben aufweisen.
